# EUROPEAN PATENT SPECIFICATION

(11) **EP 2 151 133 B1**
(45) Date of publication and mention of the grant of the patent: **07.12.2011**
(21) Application number: 08750291.0
(22) Date of filing: 14.05.2008
(51) Int. Cl.: H04W 88/18

(54) **LOOP DETECTION/PREVENTION FOR SMS MESSAGES**
SCHLEIFENERKENNUNG/-PRÄVENTION FÜR SMS-NACHRICHTEN
DETECTION/PREVENTION DE BOUCLE POUR MESSAGES SMS

(30) Priority: 15.05.2007 IE 20070354
(43) Date of publication of application: 10.02.2010
(73) Proprietor: Anam Mobile Limited, Dublin 2 (IE)
(72) Inventor: MURTAGH, Padraig, Co. Kildare (IE); GAHAN, Robert, Dublin 14 (IE); MURTAGH, John, Dublin 18 (IE)
(74) Representative: O'Neill, Aoife
(86) International application number: PCT/EP2008/055928
(87) International publication number: WO 2008/138955

(56) References cited:
- WO-A-2006/040749
- WO-A-2006/056791
- US-A1- 2005 036 457
- US-A1- 2005 064 881
- US-A1- 2005 198 270

## Description

### Field of the Invention

This invention relates to a system and method for managing SMS messages in a network which supports value added message-handling services for subscribers.

### Background to the Invention

The Short Message Service (SMS) is a popular way for users to communicate with one another. In the simplest form of operation, a short text-based SMS message of limited size is sent from a first user, the message is routed via a Service Centre (SC) and is delivered to a second user. The message can be sent between users of GSM/UMTS mobile phones or at least one of the users can use a landline phone having SMS capability. In addition, there are various inter-working services which convert between SMS and voice, facsimile, email or web-based formats. A range of external information providers use SMS to deliver information to end-users, such as news, weather reports and traffic reports.

A range of value added message-handling services are now available for SMS users. These so-called 'smart services' can provide features such as: automatically diverting an SMS to another user before the original recipient receives the SMS (Divert Service); automatically copying an SMS to another user (Copy Service); and sending an automated response to the originator of a short message (Auto-response Service). One network architecture for implementing smart services to SMS subscribers is described in International Patent Application WO2006/040749. In this application, a Smart Services Control Node (SSCN), also known as an SMS Router, transparently intercepts a delivery attempt of an SMS message and implements a service based on a subscriber's preferences.

One problem that can occur with providing these value added message-handling services which send or generate an SMS message based on the event of an original SMS message termination attempt (such as diverting a message, copying a message, or auto-responding to a message) is that an excessive number of message transaction hops can occur. A single message can be bounced between a chain of different users, who each have enabled a message-handling service. A single original message can give rise to multiple other messages, which each propagate through the network, or between networks. If a group of subscribers have enabled message-handling services which forward messages, it is possible for a continuous looping of a message to occur between the group of subscribers. These loops cannot be detected by existing networks.

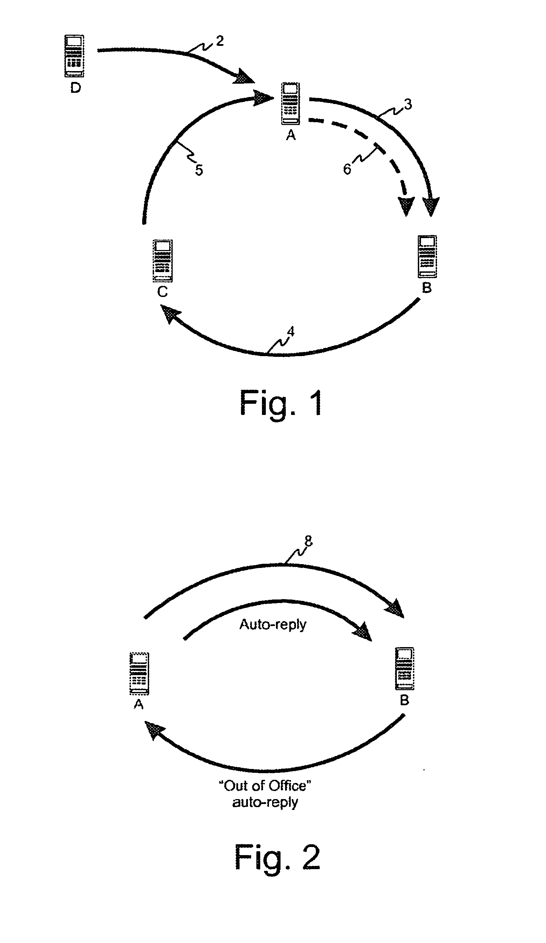

A few examples of the problem will now be describe. A first example, shown in Figure 1, illustrates how use of the copy service can cause a loop to form. Subscriber A has activated a copy service, with user B's mobile number as the "copy-to-destination". The copy service, for the purpose of this example, is a service where one user can automatically have a copy of some or all short messages he receives sent to another mobile user. Mobile user B can be a subscriber of the same mobile network as the subscribing user A or mobile user B can be a subscriber of a different mobile network.. User B has also activated a copy service, with user C's mobile number as the "copy-to-destination". User C has also activated a copy service, with user A's mobilc number as the "copy-to-destination". When user D sends a message 2 to subscriber A, then the copy-service that subscriber A has activated will automatically send 3 a copy of that message to user B. When user B receives the message, the copy service that user B has activated will automatically send 4 a copy of the message to user C. Similarly, when user C receives the message, the copy service that user C has activated will automatically send 5 a copy of the message to subscriber A. Thus, a complete loop has formed and messages will continue to propagate 6 around the loop.

A second example illustrates how use of the divert service can cause a loop to form. Subscriber A has activated a copy service, with user B's mobile number as the "divert-to" destination. The divert service, for the purpose of this example, is a service where a subscriber A chooses to divert some or all of his short messages to another mobile user B. The said mobile user B can be a subscriber of the same mobile network as the subscribing user A or the said mobile user B can be a subscriber of a different mobile network. User B has activated a divert service with user C's mobile number as the "divert-to" destination.. User C has activated a divert service with user A's mobile number as the "divert-to" destination. If user D sends a message to subscriber A, then the message is diverted to user B. Before user B's device receives the message it is diverted to user C. Before user C's device receives the message it is diverted to subscriber A and hence the beginning of a continuous loop.

A third example illustrates how use of the copy service can cause a loop to form for a subscriber A with multiple devices X1, X2 and X3. Each device X1, X2 and X3 has a separate mobile number or MSIDSN number. Subscriber A has activated a copy service, with all devices as the "copy-to" destination. The copy service, for the purpose of this example, is a service where a subscriber A chooses to copy some, or all, of his short messages terminated to one device (X1, X2 or X3) to all his other devices. If user D sends a message to subscriber A's device X1, then the message is automatically copied to devices X2 and X3. Before device X2 receives the message it is automatically copied to devices X1 and X3 and hence the beginning of a continuous loop.

A fourth example, shown in Figure 2, illustrates how use of the divert service can cause a loop to form. Subscriber A has auto-response service. The auto-response service, for the purpose of this example, is a service where an automated response is sent to the originator of any short message sent to the subscriber. User B also uses the auto-response service. When subscriber A sends user B a message 8, an auto-response is automatically sent from user B to subscriber A indicating "Out Of The Office" for example. When subscriber A receives the auto-response message, an auto-response is automatically sent from subscriber A back to user B and hence the beginning of a continuous loop.

These examples show loops resulting from the use of the same service by each user. However, loops can also result from a mix of services, such as subscriber A has activated the auto-response service, user B has activated the copy-to service to copy a received message to user C, user C has activated the message divert service to divert received messages to subscriber A. In use, user B sends a message to subscriber A. An auto-response message is automatically sent to user B. A copy of the auto-response message is then automatically sent to user C - this results in the automatic divert of the auto-response message to subscriber A, which then generate an auto-respond message to user C, who diverts to subscriber A and hence the beginning of a continuous loop.

The above are examples only: the problem of loops can arise with other services where the service automatically forwards a message, or generates a new message. A method known from document WO 2006/056791 discloses setting a currently unused bit in a TPDU and using it as a divert indicator so that after it is set, further diversions of SMS messages can be selectively prevented in order to avoid loops on long chains. The present invention seeks to reduce the number of messages that are propagated through a network due to subscribers using message-handling services.

At least one aspect of the present invention seeks to limit, or avoid, delivery loops between subscribers which can occur when value added message-handling services are used by multiple subscribers.

At least one aspect of the present invention seeks to limit, or avoid, delivery loops between subscribers which can occur when value added message-handling services are used by subscribers of different operator networks.

### Summary of the Invention

A first aspect of the present invention provides a method of processing SMS messages at a message service entity according to claim 1.

In this aspect of the invention, the message service entity stores delivery trail information for message previously processed by the message service entity, and the step of inspecting delivery trail information associated with the received message comprises using an identifier in the received message, or derived from the received message, to access the stored delivery trail information. An advantage of this embodiment is that it requires little, or no, cooperation between network operators, as information is stored at each network operator. A message only needs to carry an identifier which can be referenced to state stored at a network entity. One embodiment avoids the need to carry a message ID, as it calculates an identifier based on existing fields of the message.

A second aspect of the present invention provides a method of processing SMS messages at a message service entity according to claim 8.

In this aspect of the invention, the delivery trail information can be carried with the message and the step of inspecting delivery trail information associated with the received message can comprise inspecting the delivery trail information carried with the message. An advantage of this embodiment is that it can avoid the need to store state at message service entities along the delivery trail.

The message-handling services may forward a received message to subscribers of the same mobile operator's network, or to subscribers of another mobile operator's network.

Advantageously, the identifier is a globally unique message identifier, which further improves the performance when messages are delivered between different network operators.

Advantageously, the list of subscribers that the message has been forwarded from is inspected and invocation of the message-handling service is prevented for a subscriber which appears in the list of subscribers that the message has been forwarded from. This can prevent a loop from occurring in the delivery trail between subscribers.

Advantageously, the method uses stored rules which specify a relationship between services that have been applied to a message and message-handling services which can be invoked. The rules are used to decide whether a message-handling service is invoked. These rules can prevent a combination of services being applied to a message which are likely to generate a large number of messages, or which are likely to cause a loop to occur.

Advantageously, a particular message can be identified when it is subsequently received by the same network entity which had previously handled the said message, which is indicative of a potential loop in the delivery trail having occurred. A message can be compared with a list of identifiers of messages previously processed by the network entity. The identifier can take the form of a unique message identifier carried by a message, or a message can be identified based on one characteristic field, or a combination of characteristic fields, within the message.

Various ways are described for associating the delivery trail information with a message. These include: storing the delivery trail information as hidden text within the message; storing the delivery trail information in the UserDataHeader (UDH) header of the message; storing the delivery trail information in an extension container of a Mobile Application Part (MAP) operation; selecting a service centre address which indicates that the message has been subject to, or generated by, a message-handling service.

The additional information that is added by the methods described above can be used in a proprietary manner solely by a first network which generates the delivery trail information. The first network can store the delivery trail information for it's own use, or it can add the delivery trail information to the message and inspect that information when the message is received, again, by the first network. For example, delivery trail information is associated with a message using one of the techniques described above and, upon receipt of a message, the message is inspected to check if it includes the additional information. If it does, the first network takes action based on this information. In this case, a hop count >=1 will indicate that the first network has seen the message before and that, therefore, the message is likely to form part of a looped delivery trail. Any information within the message indicating services that have been applied to the message will indicate services applied by the first network. Consequently, a message which is marked as having already been diverted is not diverted again (high probability of a loop.)

Alternatively, delivery trail information can be used, and updated, by multiple network operators, such that each network operator updates the delivery trail information (e.g. by incrementing the hop counter or by setting appropriate bits in the delivery trail information) to indicate which services that network it has applied to the message.

The steps of the method can be performed at a single network entity, such as an SMS Router or Smart Services Control Node, or the steps of the method can be distributed across several network entities, such as any combination of an SMSC, an SMS Router and an entity which hosts a Smart Services Application.

The functionality described here can be implemented in software, hardware or a combination of these. The invention can be implemented by means of hardware comprising several distinct elements, and by means of a suitably programmed computer. Accordingly, another aspect of the invention provides software for implementing the method.

It will be appreciated that software may be installed on a network entity at any point during the life of the equipment. The software may be stored on an electronic memory device, hard disk, optical disk or other machine-readable storage medium. The software may be delivered as a computer program product comprising code which is tangibly embodied on a machine-readable carrier or it may be downloaded to the network entity via a network connection.

### Brief Description of the Drawings

Embodiments of the invention will be described, by way of example only, with reference to the accompanying drawings in which:
Figure 1 shows a first example of a delivery loop arising from a message-handling service (a copy to service);
Figure 2 shows a second example of a delivery loop arising from a message-handling service (an auto-response service);
Figure 3 shows the typical messaging networks of two network operators;
Figure 4 is a flow diagram of logic performed by a network entity to process a received message which carries delivery trail information;
Figure 5 is a flow diagram of logic performed by a network entity to process a received message which stores delivery trail information about messages;
Figure 6 is a call flow diagram for delivering an SMS message in which signalling between network entities uses additional information in a UDH header;
Figure 7 is another call flow diagram for delivering an SMS message in which signalling between network entities uses additional information in an expanded UDH header;
Figure 8 is a call flow diagram for delivering an SMS message which uses MAP signalling between network entities to carry additional information;
Figure 9 shows a way of generating a unique ID for a message based on fields of the message;
Figure 10 is a call flow diagram for delivering an SMS message which uses the method shown in Figure 9;

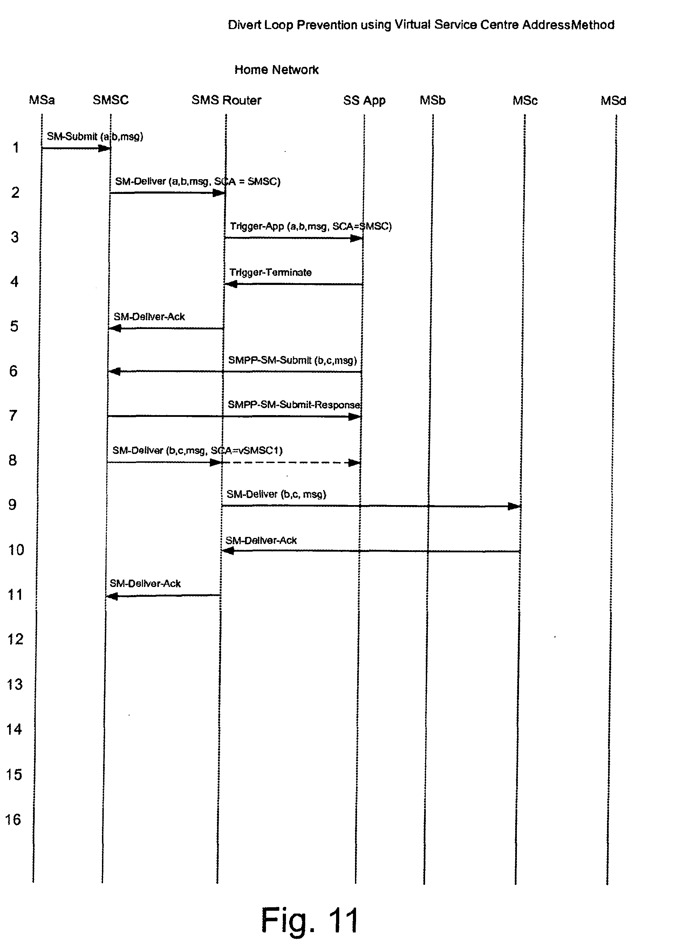

Figure 11 is a call flow diagram for delivering an SMS message which makes use of a Virtual Service Centre Address;
Figure 12 is a flow diagram of logic performed by a network entity to follow a delivery trail of a message;
Figure 13 is a call flow diagram for delivering an SMS message which uses SMPP signalling between network entities to carry additional information.

### Detailed Description of the Drawings

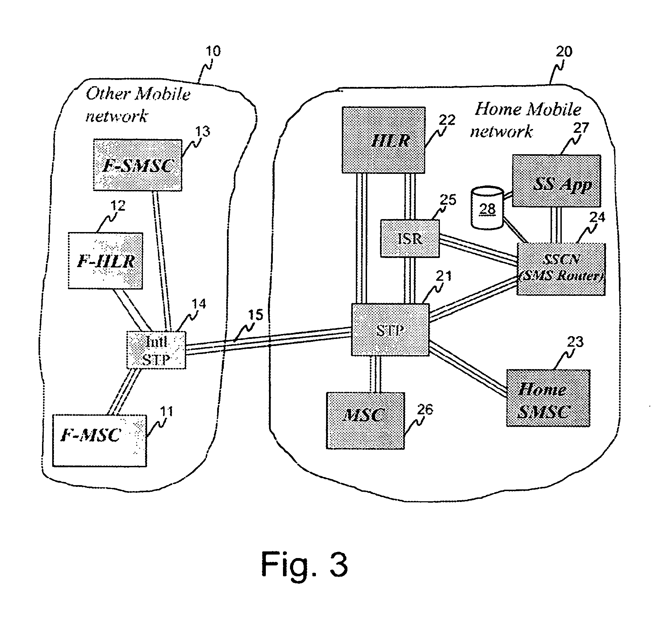

Figure 3 shows an example of a network in which smart services can be applied to SMS messages. This network is described in detail in the aforementioned WO2006/040749, Figure 3 shows a first operator network 10 connected to a second operator network 20. The first operator network 10 comprises a Mobile Switching Centre (MSC) 11, a home location register (HLR) 12 and an associated Short Message Service Centre (SMSC) 13, all of which are connected to a signalling routing node 14. The second operator network (20) comprises a home location register (HLR) 22, a Short Message Service Centre (SMSC) 23. a Mobile Switching Centre (MSC) 26, all connected to the signalling routing node 21. The second operator network (20) also comprises a Smart Service Control Node (SSCN) 24 and an intelligent signalling routing node (ISR) 25. The intelligent signalling routing node 25 is connected to a signalling network at the signalling routing node 21. The signaling routing node 25 is capable of routing messages to the SSCN 24 and the HLR 22. Signalling routing nodes 14, 21 in the two networks 10, 20 are connected via a signalling network 15 which typically uses Signalling System #7 (SS7).

In Figure 3, network 20 is shown as the home operator network of a particular subscriber and network 10 is another operator's network. In Figure 3 the elements of network 10 are preceded by an 'F-' to indicate that they belong to a 'foreign' operator. The term 'foreign' does not necessarily mean that network 10 is overseas. Network 10 could be located within the same country, or a different country, compared to network 20.

As an example of using this network, consider a user sends a SMS message from a device (e.g. a mobile telephone) in the first operator network 10 to a device in the second operator network 20. The SMS message delivery is managed by the SMSC 13 associated with the sender. The SMSC 13 initiates a message delivery attempt by sending a location query to the HLR 22 associated with the second device.

This HLR query is transmitted over the signalling network 15 to the second operator network 20 via the signalling routing nodes 14, 21, 25. The Intelligent Signalling Routing node (ISR) 25 intercepts the inbound delivery attempt and routes it to the Smart Services Control Node (SSCN) 24. The SSCN 24 examines the inbound delivery attempt to determine whether Smart Services need to be invoked or applied to the SMS message. If a Smart Service message is required for the message the SSCN modifies the location parameter of the inbound delivery attempt, for example modifying the HLR query response, which is returned to the SMSC 13 in the first operator's network. The modified value is such that the SMSC 13 in the first operator's network 10 delivers the actual message to the SSCN 24. In this regard the SSCN 24 is acting as the serving MSC towards the SMSC 13 in the first operator's network 10. The Smart Services associated with the subscriber to the second network to are executed by a Smart Services Application 27. The Smart Services Application 27 can reside on the SSCN 24, or on a separate network server. The network entity shown as a Smart Services Control Node (SSCN) 24 is also called an SMS Router and that term will be used hereafter.

A non-exhaustive list of example Smart Services is: auto 'on vacation' response, copy/divert to e-mail, malicious content filter, legal interception of SMS messages for law enforcement, copy to messages to an alternate destination, divert messages if it is not reachable, information for outbound roamers, group messaging or personalized short codes. Once a Smart Service is considered to be applicable to the message, the SMS Delivery Attempt is re-routed via the SMS Router for Smart Service handling. The SMS Router either executes the Smart Service logic (e.g. s "copy to email") on the SMS Router locally or requests a separate system to execute the Smart Service logic. Depending on the Smart Service logic response, the message deliver attempt may (i) proceed onwards to the recipient device, e.g. copy to Inbox smart service or (ii) terminate the message successfully, e.g. divert to Inbox smart service or (iii) terminate unsuccessfully, e.g. SMS barring smart service or (iv) terminate to unsuccessfully with a temporary problem, e.g. Prepaid charging smart service where message recipient does not have enough balance. All of these actions are standard procedures that can be invoked by the network when handling the delivery of an SMS message to a recipient device. The entire process is transparent to the SMSC 13, that is no changes need to be made to the SMSC 13 or no new special interfaces need to be configured or implemented at the SMSC 13. As far as the SMSC 13 is concerned the message delivery is being attempted towards the subscriber using the standardized procedures (e.g.GSM Mobile Application Part / GSM 03.40 SMS) - the SMSC 13 is not aware that any smart service logic processing is being executed.

Various ways of controlling message-handling services will now be described. Embodiments of the present invention provide ways of allowing a network entity to reduce the number of unnecessarily forwarded messages, or to check whether invoking a service on behalf of a user will cause a loop to occur. The methods work in one of two ways:
(i) delivery trail information is added to a message by a network entity and subsequently checked and updated by network entities that subsequently receive the message (including the same network entity which first added the information);
(ii) a network locally stores (caches) delivery trail information for a message when processing the message. This information is checked if the message subsequently returns to the same network entity.

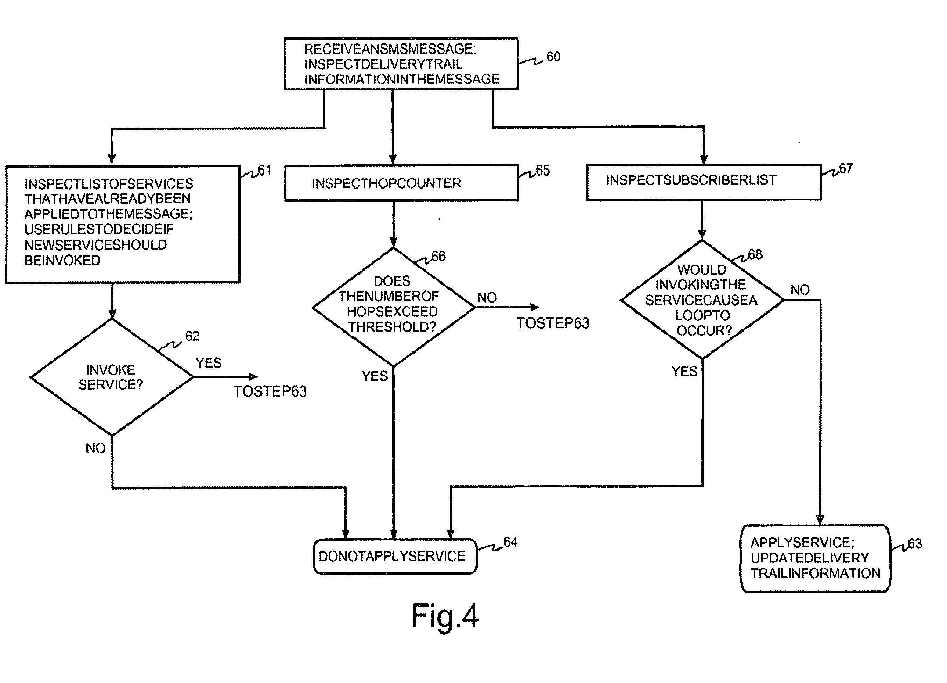

Figure 4 shows the general methods which a message-handling network entity can perform for the first option (i) above. Firstly, at step 60, the entity receives an SMS message for a subscriber who has requested a message-handling service should be invoked. The message can be received from a subscriber within the same operator's network, or from a subscriber of another operator's network. Delivery trail information in the message is inspected. As described below, some examples of the delivery trail information are: a list of services that have already been applied to the message, a hop counter (indicating the number of times the message has already been forwarded) or a list of subscribers that the message has so far been forwarded between. The method proceeds to follow one of the branches 61, 65, 67, depending on what information the method makes use of. At step 61, the method inspects the list of services that have already been applied to the message. The entity may use a set of rules to decide whether the new service should be invoked, based on what services have already been applied to the message. If the rules indicate that the service should be invoked, the method proceeds to step 63 where the service is applied to the message and the delivery trail information in the message is updated so that other network entities can determine what services have been applied. If the rules indicate that the service should not be invoked, the method proceeds to step 64.

At step 65, the hop counter is inspected. At step 66, the hop counter value is compared to a threshold value indicating the maximum number of hops that are permitted before services are inhibited. If the maximum number of hops has been exceeded, the method proceeds to step 64 and the service is not invoked. If the maximum number of hops has not been exceeded, the method proceeds to step 63 and the service is applied to the message and the hop counter in the message is updated.

At step 67, the subscriber list is inspected. At step 68, the method checks whether invoking the new service would cause the message to be forwarded to a subscriber who already appears in the list and, therefore, would cause a delivery loop. If a loop would occur, the method proceeds to step 64 and the service is not invoked. If a loop would not occur, the method proceeds to step 63 and the service is applied to the message. The subscriber list is updated.

If another network operator who receives the message understands the delivery trail information, they can similarly inspect and make use of the delivery trail information, and update the delivery trail information. If another network operator who receives the message does not understand the delivery trail information, they will simply ignore the delivery trail information and will not update the information. In a simplest case, a single network operator adds the delivery trail information to each message which it sends, and inspects each received message to check if it contains the delivery trail information.

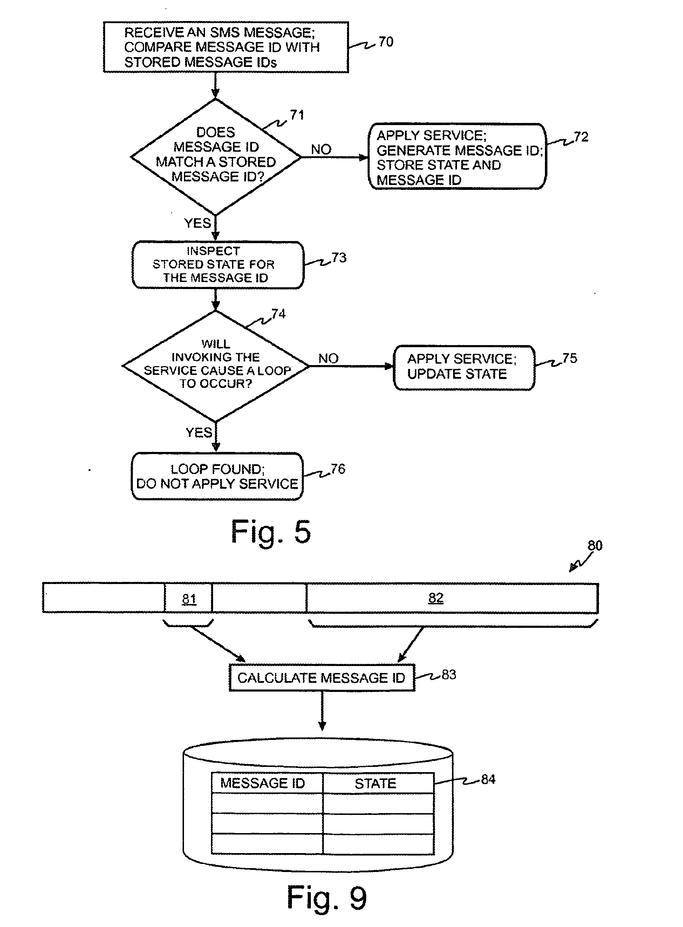

Figure 5 shows the method performed by a message-handling network entity to achieve the second option (ii) above. The message-handling network entity stores delivery trail state information for each message processed by that entity, alongside a message ID for each of those message. The message ID corresponds to a message ID carried by a message. Firstly, at step 70, the entity receives an SMS message for a subscriber who has requested a message-handling service should be invoked. The message can be received from a subscriber within the same operator's network, or from a subscriber of another operator's network. At step 71 the message ID in the received message is checked against a stored list of message IDs. If the network entity has no corresponding ID in it's list, then it indicates that the network has not yet processed that message and so there is no potential for a delivery loop. Thus, the method proceeds to step 72 and permits the service to be invoked. The entity creates delivery trail state information which it stores locally. The state information can be stored in any suitable form of storage, such as RAM, Disk, Database (e.g. store 28, Figure 3) etc. This state information can comprise the (global) message ID, the telephone number of message recipient and optionally current time-stamp and other contextual information. Returning to step 71, if the network entity has a corresponding ID in it's list, then it indicates that the network has previously processed the same message and there is a possibility that a delivery loop will occur if the new service is invoked. At step 73 the network entity checks the stored state information for that message ID. At step 74 the entity determines if the intended message recipient (i.e. the user who will receive the message if the service is invoked) has previously been a recipient of that message. If the state information indicates that the intended message recipient has already been a recipient of the message, a delivery loop is about to occur. The method proceeds to step 76 and does not apply the new service. Returning to step 74, if the state indicates that a loop will not occur, the method proceeds to step 75 and invokes the service. The stored state is updated to reflect the new service just invoked for the message.

Various options for carrying the delivery trail information, or a message ID, with a message will now be described.

### Hidden Text Characters Method

In this method, a network entity responsible for executing a smart service (e.g. SMS Router 24 or SS App 27) adds hidden text to the beginning of a short message that is being copied/diverted/auto-responded. The hidden text is sent within the body of the text message and is hidden by adding the <CR> (carriage return) character directly after the text such that, when a terminal displays the message, the proprietary text is overwritten and is not displayed to a user. The <CR> character should cause the cursor on the terminal display to immediately return to the beginning of the line and to display the remaining text carrying the real message, thus overwriting the 'hidden text' characters. While the <CR> character is preferred, any other character which has the same effect as the <CR> character can also be used.

The hidden text can be used in a way which is known both by the network entity creating the hidden text and the network entity responsible for checking for, and acting upon, the presence of the hidden text. One example of using hidden text is to use a single ASCII character of hidden text. The binary bits forming this ASCII character can be allocated as follows:

| | |
|---|---|
| Bit 7 | reserved for future use |
| Bit 6 | indicates message is/was an auto-response message |
| Bit 5 | indicates message is/has been diverted |
| Bit 4 | indicates message is/has been copied |
| Bit 3 - 0 | hop counter - number of smart services that have copied diverted or auto-responded (max value 15) |

It will be appreciated that this is one example of how the bits of a single ASCII character can be allocated and that there are many other possible schemes for using hidden text. Also, the method can use two or more ASCII characters followed by the <CR> character. Additional ASCII characters can be used to carry one or more of:
- a message identifier which will allow a message sent by a first network to be identified if it is subsequently redelivered to the first network by a looped delivery path;
- a list of subscriber IDs that the message has been forwarded between, i.e. a delivery trail.

Although the additional information added to the message is hidden from a user, it does form part of the SMS message, and uses some of the characters that would otherwise be available to a user to compose a text message. Therefore, it is desirable that the amount of hidden text should be kept to a minimum.

The hidden text can be used in a proprietary manner by the first network. Alternatively, different operators can cooperate to use the hidden text in a consistent manner, with each network incrementing the hop counter (bits 0-3) and adding to the list of services that have been applied to the message (bits 4-6).

When a network entity (SSCN, SMSC, SS Application) receives a message for which a service is to be invoked, the network entity:
- checks if the 2^{nd} character of the text is <CR> - this is used as a blunt mechanism for detecting if loop detection hidden text is present.
- if the <CR> character is present in this position, then the hop-counter is checked and if above a threshold value (e.g. 15) then the message is not copied forwarded or auto-responded. Interactions between services are also checked. For example, rules can be set to: not divert or copy any auto-respond message; not auto-respond to messages that are copied or diverted; not divert any message which has previously been diverted. If the hop counter is below the threshold value, the hop counter value is incremented (bits 0-3), the values of bits 4-6 are copied and updated to reflect the service that has just been applied to the message.
- if the <CR> is not present then the network entity cannot check if a loop will occur or if the number of hops has been exceeded. However, it inserts hidden text plus the <CR> at the beginning of the new message before copying, diverting or auto-responding. In this manner, any network entities which recognise the meaning of the hidden text can inspect the hidden text.

This method is advantageous as the body of text should always be forwarded, irrespective of what inter-network protocols arc used between two network operators (SMPP, GSM MAP, ANSI-41 MAP, etc), and irrespective of what type of wireless technology the terminals use (GSM, CDMA etc.), since the ASCII values of the text field are common.

### Basic UDH method

3GPP 23.040 describes the encoding of short messages. Part of the encoding is the User Data Header, which includes a number of Information Element Identifiers (IEI). IEIs in the range C0-D0 are reserved for Short Message Service Centre proprietary uses. Sections 9.2.3.23 - 9.2.3.24 of 3GPP 23.040 describe the UDH header.

This method carries information within the User Data Header (UDH) of short messages which can be used to detect the presence of loops, or an excessive number of forwardings. The information can mark a message as being (or having previously been) diverted, copied or auto-responded.

In an embodiment of this method, a non-reserved IEI value is used to carry the delivery trail information. Advantageously, one of the IEI. in the range C0-D0 is used although any non-reserved IEI value could be used. One example, way of coding the IEI octets is:

| | | |
|---|---|---|
| Octet 1 | IEI value xx [Loop Detection] IEI length (set to 1 for now but could be expanded) | |
| Octet 2 | | |
| Octet 3 | Bit 7 | for future use |
| | Bit 6 | indicates message is an auto-response message |
| | Bit 5 | indicates message is has been diverted |
| | Bit 4 | indicates message is has been copied |
| | Bit 3 - 0 | hop counter - number of smart services that have copied, diverted or auto-responded (max value 15) |
| Octet 4 etc. for future use - can be used to indicate other as yet defined smart services that have been invoked. | | |

When a copy-to, divert-to or auto-response smart service is invoked on a message, the network entity:
- checks if the Loop Detection IEI is present;
- if it is present, then the hop-counter (bits 0-3) is checked. If the hop-counter is above the threshold value then the message is not copied, forwarded or auto-responded. Interactions between services are also checked, using stored rules, in a similar manner as described above for the hidden text method.
- If the IEI is not present then a new short message is constructed and the UDH containing the Loop Detection IEI is added to the beginning of the message before copying, diverting or auto-responding. For the same reasons as described above, this can allow other network entities which do recognise the IEI to perform loop detection.

In the case of concatenated short messages the loop detection IEI only needs to be added to the first segment of the message.

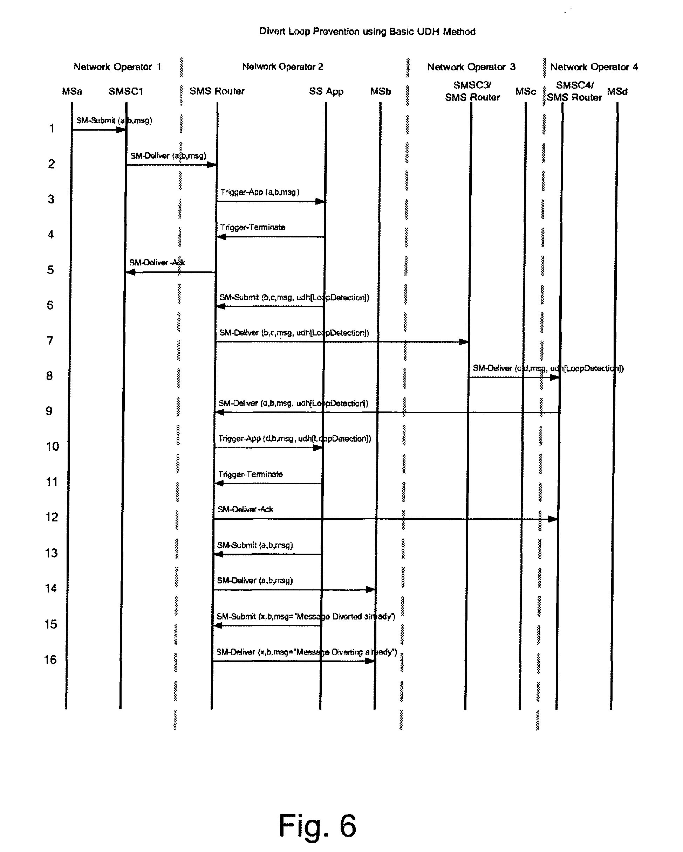

Figure 6 shows an example call flow which is initiated by a subscriber 'a' of Network Operator I using terminal MSa. Subscriber 'a' sends a message to a subscriber 'b' of Network Operator 2. Subscribers 'b', 'c' and 'd' form a loop due to each of them using a message divert service.

### Call Flows - Divert Loop Detection using Basic UDH Method

| | |
|---|---|
| 1 | Subscriber "a" submits a short message via the local SMSC for destination subscriber "b" |
| 2 | Using normal MAP procedures (SriForSM and FSM) SMSC1 attempts to deliver the short message to subscriber "b". The message is routed in the network of Network Operator 2 towards the SMS Router. |
| 3 | The message is triggered for smart services to the SS Application. |
| 4 | Since "b" has a divert service so the original message is terminated |
| 5 | Message is acknowledged to SMSC1 |
| 6 | The smart service application submits a new message to the SMS Router destined for subscriber "c". The message contains additional UDH information indicating that the message has been diverted. |
| 7 | Using normal MAP procedures (SriForSM and FSM) SMS Router |
| | attempts to deliver the short message to subscriber "c". The message contains divert information in the UscrDataHeader (UDH) of the short message. The message is intercepted in the network of Network Operator 3 on behalf of subscriber "c". |
| 8 | Subscriber "c" has a diversion service also. Using normal MAP procedures (SriForSM and FSM) SMSC3 attempts to deliver the short message to subscriber "d". The diverted message should carry the UDH it received unmodified as part of any diverted message The message is intercepted in network of Network Operator 4 on behalf of subscriber "d". |
| 9 | Subscriber "d" has a diversion service also. Using normal MAP procedures (SriForSM and FSM) SMSC4 attempts to deliver the short message to subscriber "b". The diverted message should carry the UDH it received unmodified as part of any diverted message The message is intercepted in network of Network Operator 2 on behalf of subscriber "b". |
| 10 | The message is triggered for smart services to the SS Application. The smart service application understand the UDH information and if the "number of hops" is exceeded it will not forward on the message. |
| 11 | Since "b" has a divert service, the original message is terminated |
| 12 | Message is acknowledge to SMSC4 |
| 13 | Because the short message loop has been detected, as a policy option the smart service may submit the original message to the original destination ("b") |
| 14 | The original short message is delivered to "b". |
| 15 | A new short message indicating that diversion has caused a loop is submitted to the short message by the smart service |
| 16 | The "new" short message, is delivered to subscriber "b" |

The final steps 15, 16 send subscriber b a message notifying them that the message has not been diverted (in accordance with their service settings) because a loop occurred. A user may choose to update their service settings after receiving this message to prevent further loops occurring. The sending of this message at steps 15, 16 is optional.

### Expanded UDH Method

This method also uses the UDH header of GSM short messages in order to mark messages as being diverted, copied or auto-responded. As before, one of the non-reserved IEIs, such as one in the range C0-D0, is used for loop detection purposes.

The information contained in the IEI can comprise a message ID. The short message ID can be used by a message service network entity to identify when the same message is received by the network for a second time. Thus, the message ID allows a network entity to recognise when the message it is handling forms part of a loop. Preferably, the short message ID is a globally unique identifier of the message. One way of creating a globally unique ID is to begin each ID with a code which is unique to the network operator (e.g. operator 'ABC' has code 123, operator 'DEF' has the code 124 etc.) The remainder of the ID can be allocated with a unique number within that network. The method for processing the message ID at a message-handling network entity is as previously described with respect to Figure 5.

As an alternative to, or as an addition to, carrying a message ID in a message, the IEI can carry information about the delivery trail of the message, such as a list of subscribers who have received the message. The method for processing the message at a message-handling network entity is as previously described with respect to Figure 4. When a smart service application receives a short message it can identify if this message has previously been copied, diverted or auto-responded from the information in the User Data Header. It can use this information to determine if the new recipient of the message has received this message previously and hence detect a loop.

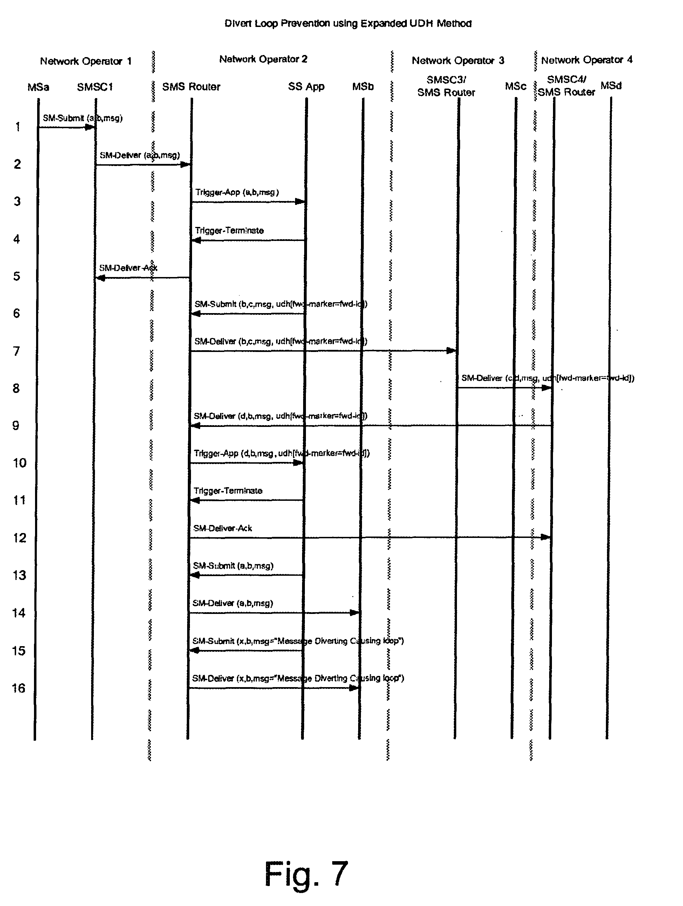

Figure 7 shows an example call flow which is initiated by a subscriber 'a' of Network Operator 1 using terminal MSa. Subscriber 'a' sends a message to a subscriber 'b' of Network Operator 2. Subscribers 'b', 'c' and 'd' form a loop due to each of them using a message divert service.

**Call Flows - Divert Loop Detection using Expanded UDH Method**

| | |
|---|---|
| 1 | Subscriber "a" submits a short message via the local SMSC for destination subscriber "b" |
| 2 | Using normal MAP procedures (SriForSM and FSM) SMSC1 attempts to |
| | deliver the short message to subscriber "b". The message is routed in the |
| | network of Network Operator 2 towards the SMS Router. |
| 3 | The message is triggered for smart services to the SS Application. |
| 4 | Since "b" has a divert service so the original message is terminated |
| 5 | Message is acknowledged to SMSC 1 |
| 6 | The smart service application submits a new message to the SMS Router destined for subscriber "c". The message contains additional UDH information that the message has been diverted. |
| 7 | Using normal MAP procedures (SriForSM and FSM) the SMS Router attempts to deliver the short message to subscriber "c". The message contains divert information in the UserDataHeader (UDH) of the short message. The message is intercepted in the network of Network Operator 3 on behalf of subscriber "c". |
| 8 | Subscriber "c" has a diversion service also. Using normal MAP procedures (SriForSM and FSM) SMSC3 attempts to deliver the short message to subscriber "d". The diverted message should carry the UDH it received unmodified as part of any diverted message The message is intercepted in the network of Network Operator 4 on behalf of subscriber "d". |
| 9 | Subscriber "d" has a diversion service also. Using normal MAP procedures (SriForSM and FSM) SMSC4 attempts to deliver the short message to subscriber "b". The diverted message should carry the UDH it received unmodified as part of any diverted message The message is intercepted in the network of Network Operator 2 on behalf of subscriber "b". |
| 10 | The message is triggered for smart services to the SS Application. The smart service application understands the UDH information and if the forward ID information indicates that this message has already been forwarded by the SS App it will not forward on the message. |
| 11 | Since "b" has a divert service the original message is terminated |
| 12 | Message is acknowledged to SMSC4 |
| 13 | Because the short message loop has been detected, as a policy option the smart service may submit the original message to the original destination ("b") |
| 14 | The original short message is delivered to "b". |
| 15 | A new short message indicating that diversion has caused a loop is submitted to the short message by the smart service |
| 16 | The "new" short message is delivered to subscriber "b" |

### MAP Method

The Mobile Application Part (MAP) is an application-layer protocol used in wireless networks. The extensionContainer parameter of the MT-ForwardSM MAP operation carries additional information about whether the message has been subject to divert, copy or auto-response services. This additional information can be carried over the SS7 network using the MAP procedures. Any entity receiving or intercepting the short message can view the additional information specifying previous copied, divert and auto-response operations and can use this information to determine if there is a possibility of a loop. The additional information can comprise: a list of subscribers the message has been routed between; a hop counter; a (globally unique) message ID, as described for other embodiments.

Delivery of a short message in GSM networks uses an SriForSM MAP operation which is sent from an SMSC to an HLR to acquire location information. The SMSC shall send the short message in a subsequent MT-ForwardSM (FSM) MAP operation destined for the MSC handling the destination subscriber. In Figure 3 the SM-Deliver call flow consists of an SriForSM and a MT-ForwardSM.

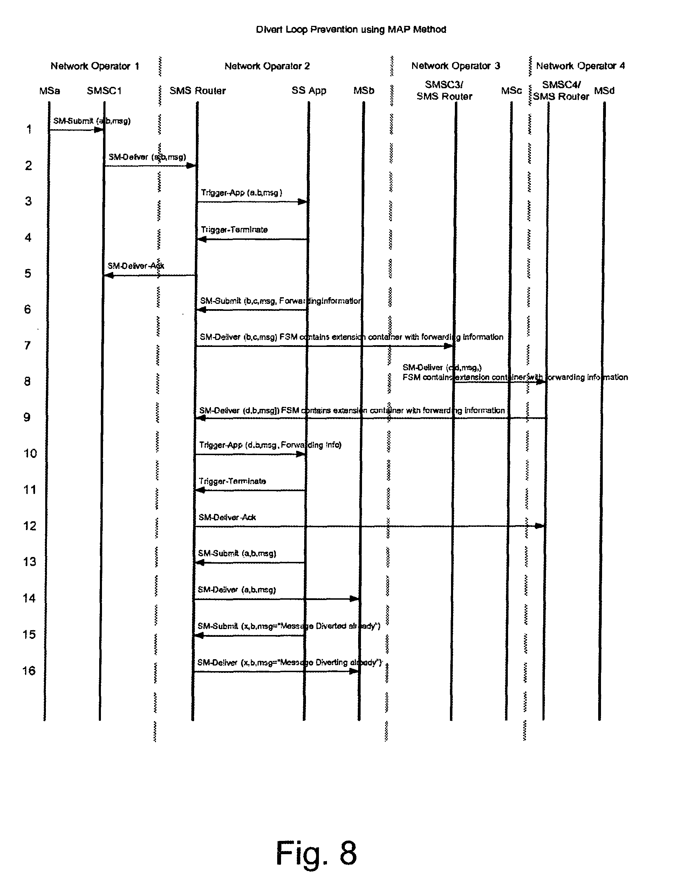

Figure 8 shows an example call flow which is initiated by a subscriber 'a' of Network Operator 1 using terminal MSa. Subscriber 'a' sends a message to a subscriber 'b' of Network Operator 2. Subscribers 'b', 'c' and 'd' are part of a loop due to each of them using a message divert service.

### Call Flows - Divert Loop Detection using MAP Method

| | |
|---|---|
| 1 | Subscriber "a" submits a short message via the local SMSC for destination subscriber "b" |
| 2 | Using normal MAP procedures (SriForSM and FSM) SMSC1 attempts to deliver the short message to subscriber "b". The message is routed in the network of Network Operator 2 towards the SMS Router. |
| 3 | The message is triggered for smart services to the SS Application. |
| 4 | Since "b" has a divert service so the original message is terminated |
| 5 | Message is acknowledged to SMSC1 |
| | The smart service application submits a new message to the SMS Router. The message contains information that the message has been diverted. |
| 7 | Using normal MAP procedures (SriForSM and FSM) SMS Router attempts to deliver the short message to subscriber "c". The FSM MAP operation contains divert information in the optional extension container MAP parameter. The message is intercepted in the network of Network Operator 3 on behalf of subscriber "c". |
| 8 | Subscriber "c" has a diversion service also. Using normal MAP procedures (SriForSM and FSM) SMSC3 attempts to deliver the short message to subscriber "d". The FSM MAP operation contains divert information in the optional extension container MAP parameter. The message is intercepted in the network of Network Operator 4 on behalf of subscriber "d". |
| 9 | Subscriber "d" has a diversion service also. Using normal MAP procedures (SriForSM and FSM) SMSC4 attempts to deliver the short message to subscriber "b". The FSM MAP operation contains divert information in the optional extension container MAP parameter. The message is intercepted in the network of Network Operator 2 on behalf of subscriber "b" by the SMS Router. |
| 10 | The message is triggered for smart services to the SS Application. |
| 11 | Since "b" has a divert service the original message is terminated |
| 12 | Message is acknowledged to SMSC4 |
| 13 | Because the short message loop has been detected, as a policy option the smart service may submit the original message to the original destination ("b") |
| 14 | The original short message is delivered to "b". |
| 15 | A new short message indicating that diversion has caused a loop is submitted to the short message by the smart service |
| 16 | The "new" short message is delivered to subscriber "b" |

### Unique Message ID Method

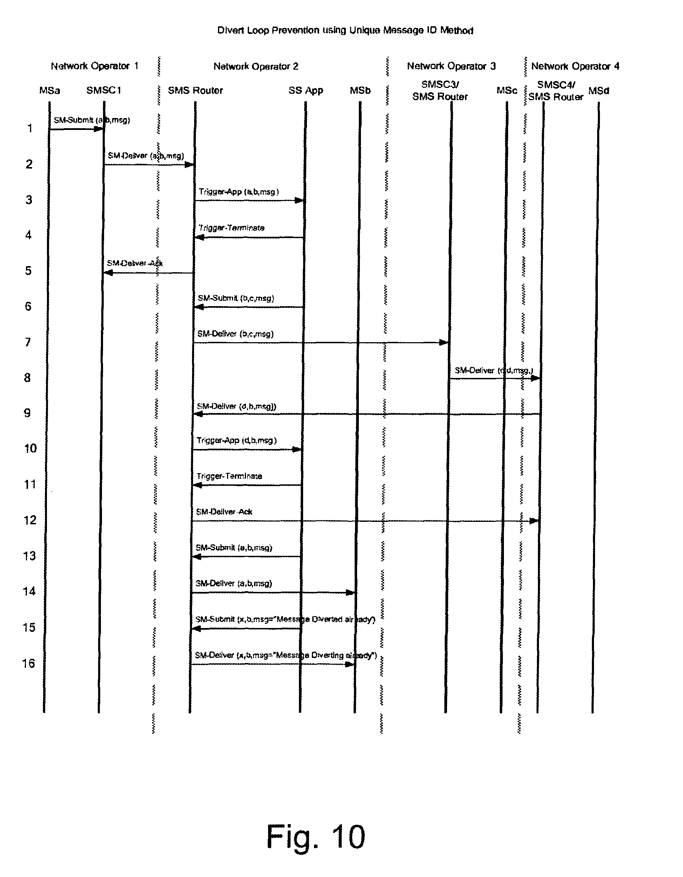

In previous embodiments which use a message ID, the message ID is carried within the message. In this embodiment of the invention, a message ID is not carried within a message. Instead, as illustrated in Figure 9, a message-processing network entity calculates a message ID based on existing contents of the message, such as the destination address and message text. The message ID can be calculated using an algorithm which operates on these fields (or other existing fields) of the message to derive a number which is unique for the message. Figure 9 shows a 'calculate message ID' function operating on the contents of fields 81, 82 of message 80. This avoids the need to carry a message ID within the message and therefore overcomes problems of compatibility between networks. Whenever a received message is to be subjected to a divert, copy or auto-respond service a local store of message IDs is examined to see if that message has previously been the subject of one of those services. Preferably, the calculated message ID is used to access stored state which indicates services that have been applied to the message, or other delivery trail information. The method of using the message ID which is calculated using this method is the same as shown in Figure 5. The call flow is detailed in Figure 10. A less preferable alternative to referencing stored state information by calculating a message ID based on message fields is to simply reference stored state information using the fields themselves. However, this is much less referable as it requires a much larger amount of information to be stored locally.

One potential limitation of calculating a message ID based on existing fields of a message is that the method does not have the capability to distinguish a forwarded/copied message forming a delivery loop from a message that has been submitted twice (in error or otherwise) by the same originator, since both the text and the destination address will be the same. SMS Messages are usually delivered within a short timescale (e.g. within a second, or several seconds). In contrast, redelivery attempts by a user or network tend to occur over a longer period of time. The message IDs stored locally at each network entity can be allocated a lifetime, after which they are deleted from local storage. By setting this lifetime to a suitable value (e.g. longer than the time period when a delivery loop is likely to occur, but shorter than the time period in which successive delivery attempts would be made) a network entity will only suppress messages that are within a delivery loop. Alternatively, a network entity can be arranged to not forward/copy the second delivery attempt of the message but, as a local operator policy option, this can be delivered directly to the original destination. This is considered an acceptable user experience as the original message would be forwarded/copied etc. as expected and the second identical message terminated locally to the subscriber (again as a local operator policy option).

### Call Flows - Divert Loop Detection using Unique Message ID Method

| | |
|---|---|
| 1 | Subscriber "a" submits a short message via the local SMSC for destination subscriber "b" |
| 2 | Using normal MAP procedures (SriForSM and FSM) SMSC1 attempts to deliver the short message to subscriber "b". The message is routed in the network of Network Operator 2 towards the SMS Router. |
| 3 | The message is triggered for smart services to the SS Application. The SS Application calculates a message ID for this short message. |
| 4 | Since "b" has a divert service so the original message is terminated |
| 5 | Message is acknowledged to SMSC 1 |
| 6 | The smart service application submits a new message to the SMS Router. |
| 7 | Using normal MAP procedures (SriForSM and FSM) SMS Router attempts to deliver the short message to subscriber "c". The message is intercepted in the network of Network Operator 3 on behalf of subscriber "c". |
| 8 | Subscriber "c" has a diversion service also. Using normal MAP procedures (SriForSM and FSM) SMSC3 attempts to deliver the short message to subscriber "d". The message is intercepted in the network of Network Operator 4 on behalf of subscriber "d". |
| 9 | Subscriber "d" has a diversion service also. Using normal MAP procedures (SriForSM and FSM) SMSC4 attempts to deliver the short message to subscriber "b". The message is intercepted in the network of Network Operator 2 on behalf of subscriber "b" by the SMS Router. |
| 10 | The message is triggered for smart services to the SS Application. A message ID is calculated for the short message and if is matches a locally stored value, which has been created in a short configurable time, a loop has been detected. |
| 11 | Since "b" has a divert service the original message is terminated |
| 12 | Message is acknowledged to SMSC4 |
| 13 | Because the short message loop has been detected, as a policy option the smart service may submit the original message to the original destination ("b") |
| 14 | The original short message is delivered to "b". |
| 15 | A new short message indicating that diversion has caused a loop is submitted to the short message by the smart service |
| 16 | The "new" short message is delivered to subscriber "b" |

A range of different methods have been described above. A network operator can use a single one of these methods, or several of the methods. For example, a network operator may use the MAP method (which require support between network operators) and one of the UDH methods or the hidden text method (which do not require support between network operators). Using a range of different methods is advantageous where use of a particular method is not standardised across multiple operators.

### Virtual Service Centre Address method

This method describes a way of identifying messages which have been subject to, or which have been generated as a result of, a value-added short message service such as divert, copy, or auto-response. It can simply, and efficiently, identify messages which may be potential for loops or unwanted forwarding behaviour.

A message-handling entity (e.g. an SMSC) has a service centre address (SCA) which identifies the entity. When the SMSC sends a message to another entity (e.g. an SMS Router) a parameter in the sent message identifies the service centre address (SCA) of the SMSC. In this new method, the SMSC is allocated at least one additional service centre address for use when the SMSC sends a short message which has been generated as a result of a value-added short message service (e.g. divert, copy, auto-response). This additional address will be called a virtual service centre address (vSCA). The vSCA, or vSCAs allow other message-handling entities in the network to identify messages which may possibly result in undesirable behaviour, such as forwarding loops or excessive forwardings.

An advantageous way in which the vSCA can be applied will now be described. A message which has been subject to message-handling services is sent to an SMSC using a dedicated link, which is different to the link by which standard SMS messages would reach the SMSC. All messages received at the SMSC via this dedicated link will use the predefined vSCA instead of the default service centre address normally associated with the SMSC. When the SMSC attempts to deliver the newly generated short message(s) using normal MAP procedures, the sm-RP-OA parameter of the FSM contains a virtual service centre address and the message is routed in the home network to the SMS Router. The SMS Router is provided with knowledge of the virtual service centre addresses in use and can enforce local policies which make use of the service centre address in the received SMS message.

A single virtual SCA can be used to indicate that any one of a range of value-added services has been applied to the message. Alternatively, a larger number of vSCAs can be associated with the SMSC. A single vSCA can be associated with each different message-handling service, e.g. a unique vSCA to indicate diverted messages, a unique vSCA to indicate copied messages and so on. The message-processing policy at the SMS Router may specify, for example, that only one divert operation is allowed, only one copy operation etc. The policies operate on the virtual service centre address (vSCA). Considering that each of the three services: copy, divert and auto-response, can be identified by a different vSCA. A simple set of policies could be:
1) Auto-response messages cannot have any other service applied. This could be used to ensure that messages with the auto-response vSCA are relayed without any further action;
2) Diverted messages can be auto-responded but not copied;
3) Diverted messages cannot be diverted again.

This method does not, in itself, have the capability to identify a particular forwarded/copied message (i.e. it cannot identify that message X has been processed before) but it does provide a method in the local network to identify messages that have been generated as a result of a divert, copy or auto-response service and allows the local network to take action which can prevent undesirable message forwarding. This method can be combined with another one or more of the described methods which do have the ability to identify when a particular message has been processed before, such as methods which add delivery trail information to a message, or methods which locally cache information about a message and use the cached information to detect when the same message is received again.

### Call Flows - Divert Loop Detection using Virtual Service Centre Method

| | |
|---|---|
| 1 | Subscriber "a" submits a short message via the local SMSC for destination subscriber "b" |
| 2 | Using normal MAP procedures (SriForSM and FSM) SMSC attempts to deliver the short message to subscriber "b". The message is routed in the home network towards the SMS Router. |
| 3 | The message is triggered for smart services to the SS Application. The Trigger information includes the original destination ("b") and the Service Centre Address of the SMSC. |
| 4 | Since "b" has a divert service the original message is terminated. "b" is set up to divert SMS to "c". |
| 5 | Message is acknowledged to SMSC |
| 6 | The smart service application submits a new message to the SMSC using a dedicated link such that when the SMSC delivers the message it shall use a predefined virtual Service Centre Address associated with the smart service application link in the relevant MAP parameters as opposed to its normal network address. This address is identified as a vSCA (virtual Service Centre Address) |
| 7 | SMSC accepts the message by send SMPP-SM_Submit-response to smart service application |
| 8 | SMSC attempts delivery of the short message using normal MAP procedures (SriForSM and FSM). The service centre address parameter (sm-RP-OA) is set to the predefined virtual service centre address (SCA=vSMSC1). The message is routed in the home network towards the SMS Router. |
| 9 | The SMS Router and/or the SS App recognise the vSCA. The invocation of additional service is now controlled by the SMS Router/SS App. In the case of this example the local policy condition for invoking the Divert Smart Service Application shall exclude SMS messages generated by Divert Smart Application itself, identified by the Divert Virtual SCA and the message is delivered to the diverted destination ("c"). The policy condition for invoking the Divert Smart Service Application shall exclude SMS messages generated by specific SMS applications , where each SMS application is identified by its dedicated Virtual SCA. The SMS Router/SS App can use other available methods described in this document to detect loops |
| 10 | Message is acknowledged by MSc |
| 11 | Message is acknowledged to SMSC |

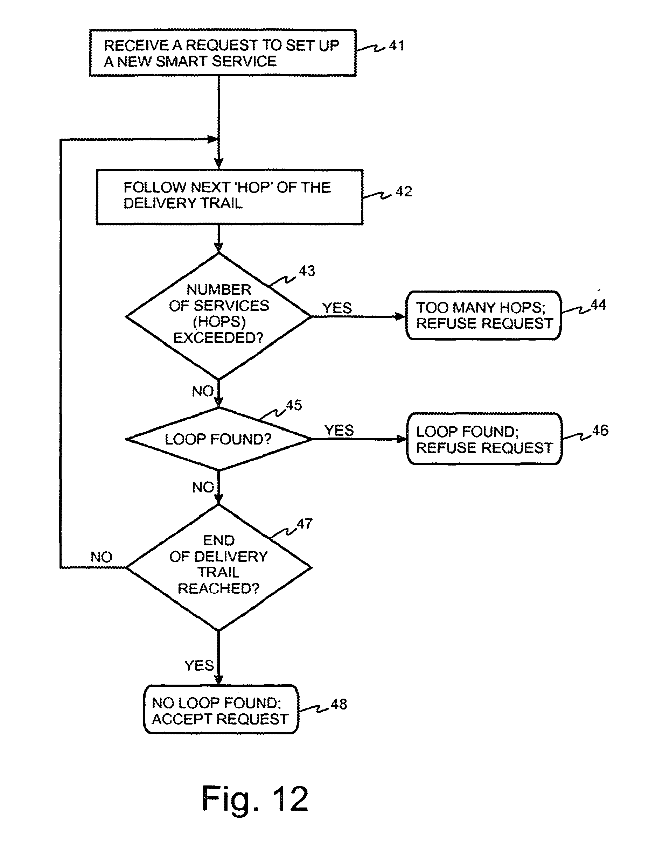

The following text, and Figures 12-13, describe some further ways of processing messages which can be used within the network of a single network operator.

### Local Detection at Service set-up time

This method checks for the presence of a loop, at the time of setting up a service, by following the delivery trail that will occur for a subscriber and ensuring that a continuous loop will not result. The request to set up a new service will typically be made by a subscriber. As an example, consider a subscriber A submits a request to set up a divert service which will divert all of subscriber A's short messages to subscriber B. Before configuring the service for subscriber A, the service subscription record of subscriber B is examined to see if subscriber A has any divert, copy or auto-response service enabled. If B has a divert service enabled and has all his short messages diverted to C then the service subscription record for C is examined to see if he has any divert, copy or auto-response service enabled. This is continued until either:
(i) a loop is detected, i.e. the delivery trail is followed at least until a point at which a loop is found to occur;
(ii) no loop is detected, i.e. the trail is followed through to the end and no loop has occurred:
(iii) a maximum number of service applications (e.g. diversions) is reached.

The flow chart of Figure 12 shows an example of the logic for implementing this embodiment of the invention. A request to set up a new service is received at step 41. The first 'hop' of the delivery trail is followed at step 42. This examines the consequence of implementing the requested service. In the example described above, the service requested by subscriber A would create a message delivery trail to subscriber B. At step 43 a check is made whether the threshold number of hops has been exceeded. If the threshold has been exceeded, the service request is refused at step 44. If the threshold has not been exceeded, the method proceeds to step 45 and checks if a loop exists. If a loop exists, the service request is refused at step 46. If a loop does not exist, the method proceeds to step 47 and checks if the end of the delivery trail has been reached. If this is the end of the trail, the request is accepted at step 48. Otherwise, the method returns to step 42. In the example above, if subscriber B has configured a divert service, this would cause the method to return to step 42 and check what effect the divert from subscriber B would have. If subscriber B had not configured a divert service, the method would end successfully at step 48 and allow the service request.

When implemented in the network of a single operator, all subscriber records are located in a local database 28 accessible by the Smart Services Application 27 and the SSCN 24. If two operators share information about the services their subscribers have enabled, a SSCN 24 or SS Application 27 accesses this information via a signalling link between the networks. The logic shown in Figure 4 can be executed by the SSCN 24.

### Local Detection at service execution time

This method works in the same manner as described above for 'local detection at service set up time' and as shown in Figure 12. The main difference is that the method is performed when a message needs to be delivered, rather than when a request to set up a service is received. This method checks for the presence of a loop, at the time of executing a service (i.e. delivering a message), by following the delivery trail that will occur for a subscriber if that service is executed and ensuring that a continuous loop will not result. The delivery trail is followed before exercising a divert-to, copy-to or auto-respond service (in real time) which will send a message along the delivery trail. If it is found that executing a service will cause a loop to occur, the service is not executed. Instead, the message is delivered directly to the subscriber without applying the service. As an example, consider that a subscriber has set up an auto-respond service. This method will check that the recipient of the auto-respond message does not also have an auto-respond service set up before sending the message. This will prevent a loop of the type shown in Figure 2 from occurring.

The two embodiments described above both require information about what services subscribers in the trail have enabled. This is likely to restrict their usefulness to situations where all subscribers involved in a delivery trail are subscribers of the same network operator. The method can also work where two (or more) network operators share information about what services their respective subscribers have enabled. However, if the delivery trail includes a subscriber of another network operator (who does not share information) this embodiment cannot detect if a loop will occur.

The following methods have wider use, and can be used to detect loops, or an excessive number of service forwardings, where a delivery trail involves subscribers of different network operators.

### SMPP optional parameter method

The Short Message Peer-to-Peer protocol (SMPP) is a protocol which can be used to exchange messages between SMS peer entities. The SMPP specifications are available at: http://www.smsforum.net. The SMPP protocol can be used between a SSCN 24 and a SMSC 23. When a service is executed on behalf of a subscriber, a new short message is created (e.g. as a result of a divert, copy, auto-response etc.) and submitted to the SMSC 23 using an SMPP operation. Additional SMPP option parameters indicate the addresses of the originating and terminating subscribers plus all other addresses that have been used in the past as part of other diverts, copies etc. In addition the SMPP operation can include an optional parameter which indicates the number of hops this message has been subjected to. This additional information added to the SMPP operation gives the history of the delivery trail. The handling SMSC 23, if it understands the new optional parameters, can decide whether to process the message based on the trail information. In addition, if the "new" message is subject to a smart service it can forward the received new optional parameters to the application 27. This method is generally applicable to SMPP version 3.4 and 5.0.

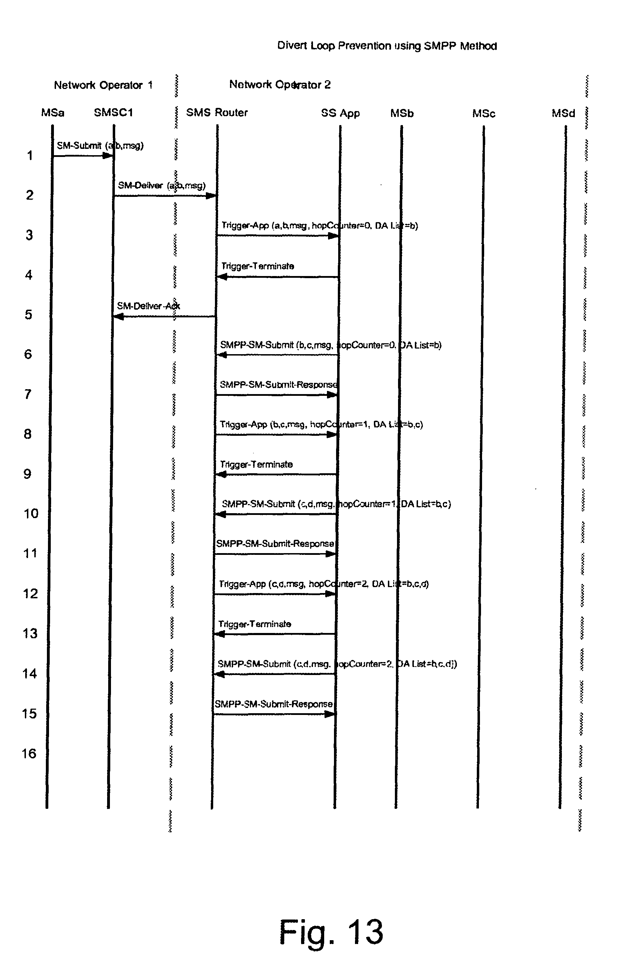

Figure 13 shows an example call flow which is initiated by a subscriber 'a' of Network Operator 1 using terminal MSa. Subscriber 'a' sends a message to a subscriber 'b' of a Network Operator 2. Subscriber 'b' has set up a divert service.

### Call Flows - Divert Loop Detection using SMPP Method

| | |
|---|---|
| 1 | Subscriber "a" submits a short message via the local SMSC for destination subscriber "b" |
| 2 | Using normal MAP procedures (SriForSM and FSM) SMSC1 attempts to deliver the short message to subscriber "b". The message is routed in the network of Network Operator 2 towards the SMS Router. |
| 3 | The message is triggered for smart services to the SS Application. The Trigger information includes the original destination ("b") and the hopCounter=0. |
| 4 | Since "b" has a divert service the original message is terminated. "b" is set up to divert SMS to "c". |
| 5 | Message is acknowledged to SMSC1 |
| 6 | The smart service application submits a new message to the SMS Router with "c" as the destination. The message contains the information from the original trigger (i.e. DA List and hopCounter) as optional SMPP parameters. |
| 7 | SMS Router accepts the message by send SMPP-SM_Submit-response to smart service application |
| 8 | Subscriber "c" has a diversion service also. The message is triggered for smart services to the SS Application. The Trigger information includes the destination list ("b" and now "c") and the hopCounter=1 |
| 9 | Since "c" has a divert service the original message is terminated on the SMS Router, "c" is set up to divert sms to "d". |
| 10 | The smart service application submits a new message to the SMS Router with "d" as the destination. The message contains the information from the original trigger (i.e. DA List and hopCounter) as optional SMPP parameters. |
| 11 | SMS Router accepts the message by send SMPP-SM_Submit-response to smart service application. |
| 12 | Subscriber "d" has a diversion service also. The message is triggered for smart services to the SS Application. The Trigger information includes the destination list ("b", "c" and now "d") and the hopCounter=2. |
| 13 | Since "d" has a divert service the original message is terminated on the SMS Router. "d" is set up to divert SMS to "b". |
| 14 | The smart service application submits a new message to the SMS Router with "b" as the destination. The message contains the information from the original trigger (i.e. DA List and hopCounter) as optional SMPP parameters |
| 15 | SMS Router accepts the message, by send SMPP-SM_Submit-response to the smart service application. At this point the SMS Router recognises that subscriber "b" is already in the DA List and terminates the message, since a loop has been detected |

The information added to the SMPP operations which specifies the history of the delivery trail (e.g. List=b,c,d at step 14 of Figure 5) allows a network entity to detect that a loop is about to occur. The hop counter allows a network entity to terminate a message if the hop counter reaches a predetermined limit.

This method can be used where different network operators are connected by SMPP. However, where SS7 links connect different operators the SMPP information will be lost.

The invention is not limited to the Embodiments described herein, which may be modified or varied without departing from the scope of the invention, as defined by the appended claims.

## Claims

1. A method of processing SMS messages at a message service entity of a first mobile operator network, the network comprising a plurality of subscribers and the network supporting message-handling services for at least some of the subscribers which forward a message to another subscriber, the method comprising:
receiving a message (70);
inspecting delivery trail information associated with the received message (71); and,
controlling invocation of a message-handling service for the received message based on the inspected delivery trail information (74);
wherein the network stores delivery trail information for messages previously processed by the message service entity, and the step of inspecting delivery trail information associated with the received message comprises using an identifier in the received message, or derived from the received message, to access the stored delivery trail information for that message (70).

2. A method according to claim 1 further comprising calculating an identifier for the received message using a plurality of fields of the received message.

3. A method according to claim 1 further comprising:
comparing the message identifier in the received message with a list of stored message identifiers representing messages previously processed by the message service entity; and,
allowing the invocation of the message-handling service if the message identifier of the received message does not match a stored identifier in the list.

4. A method according to claim 1 further comprising:
comparing the message identifier in the received message with a list of stored message identifiers representing messages previously processed by the message service entity:
accessing stored delivery trail information for the message if the message identifier of the received message matches a stored identifier in the list; and,
allowing the invocation of the message-handling service on the basis of the stored delivery trail information for that message.

5. A method according to any one of claims 1 to 4 wherein the identifier is a globally unique identifier.

6. A method according to any one of the preceding claims wherein, if a message-handling service is invoked for the received message, the method further comprises:
updating the delivery trail information associated with the received message

7. A method according to any one of claims 1 to 6 wherein, if a received message has no delivery trail information associated with it, the method further comprises:
generating delivery trail information and associating the generated delivery trail information with the message.

8. A method of processing SMS messages at a message service entity of a first mobile operator network, the network comprising a plurality of subscribers and the network supporting message-handling services for at least some of the subscribers which forward a message to another subscriber, the method comprising:
receiving a message (60);
inspecting delivery trail information associated with the received message (60); and,
controlling invocation of a message-handling service for the received message based on the inspected delivery trail information (68),
wherein delivery trail information is carried with the message as one or more of:
hidden text within the message;
data in the UDH header of the message;
data in an extension container of a MAP operation;
a service centre address which indicates that the message has been subject to, or generated by, a message-handling service; and
the step of inspecting delivery trail information associated with the received message comprises inspecting the delivery trail information carried with the message (60).

9. A method according to claim 8 wherein, if a message-handling service is invoked for the received message, the method further comprises:
updating the delivery trail information associated with the received message.

10. A method according to claim 8 wherein, if a received message has no delivery trail information associated with it, the method further comprises:
generating delivery trail information and associating the generated delivery trail information with the message.

11. A method according to any one of the preceding claims wherein the delivery trail information associated with the received message comprises one or more of:
information about the services which have already been applied to the message;
a list of subscribers that the message has been forwarded between;
a count of the number of times the message has been forwarded due to invocation of message-handling services.

12. A method according to claim 11 further comprising comparing the count in the delivery trail information associated with the received message with a threshold value and preventing the invocation of the message-handling service if the count meets or exceeds the threshold value.

13. A method according to claim 11 further comprising inspecting the list of subscribers that the message has been forwarded between and preventing the invocation of a message-handling service if it would cause the message to be forwarded to a user who appears in that list.

14. A computer program product comprising instructions for causing a processor to perform the method according to any one of claims 1 to 13.

15. An SMS message service network entity comprising a processor which is arranged to perform the method according to any one of claims 1 to 13.

## Patentansprüche

1. Verfahren zum Verarbeiten von SMS-Mitteilungen an einer Mitteilungs-Service-Einheit eines ersten Mobilfunkanbieternetzes, wobei das Netz mehrere Teilnehmer aufweist und das Netz Mitteilungshandhabungs-Services für mindestens einige der Teilnehmer stützt, die eine Mitteilung an einen anderen Teilnehmer ausgeben, wobei das Verfahren umfasst:
Empfangen einer Mitteilung (70);
Prüfen von Zuführweg-Information, die der empfangenen Mitteilung zugeordnet ist (71); und
Steuern des Aufrufs eines Mitteilungshandhabungs-Service für die empfangene Mitteilung auf der Basis der geprüften Zuführweg-Information (74);
wobei das Netz Zuführweg-Information für zuvor durch die Mitteilungs-Service-Einheit verarbeitete Mitteilungen speichert, und der Schritt des Prüfens von Zuführweg-Information, die der empfangenen Mitteilung zugeordnet ist, das Verwenden einer Identifizierung umfasst, die in der empfangenen Mitteilung enthalten oder von der empfangenen Mitteilung abgeleitet ist, um auf die gespeicherte Zuführweg-Information für diese Mitteilung zuzugreifen (70).

2. Verfahren nach Anspruch 1, ferner mit dem Berechnen einer Identifizierung für die empfangene Mitteilung unter Verwendung mehrerer Felder der empfangenen Mitteilung.

3. Verfahren nach Anspruch 1, ferner umfassend:
Vergleichen der Mitteilungs-Identifizierung in der empfangenen Mitteilung mit einer Liste gespeicherter Mitteilungs-Identifizierungen, die Mitteilungen identifizieren, welche zuvor durch die Mitteilungs-Service-Einheit verarbeitet worden sind; und
Zulassen des Aufrufens des Mitteilungshandhabungs-Service, falls die Mitteilungs-Identifizierung der empfangenen Mitteilung nicht einer gespeicherten Identifizierung in der Liste entspricht.

4. Verfahren nach Anspruch 1, ferner umfassend:
Vergleichen der Mitteilungs-Identifizierung in der empfangenen Mitteilung mit einer Liste gespeicherter Mitteilungs-Identifizierungen, die Mitteilungen identifizieren, welche zuvor durch die Mitteilungs-Service-Einheit verarbeitet worden sind;
Zugreifen auf gespeicherte Zuführweg-Information für die Mitteilung, falls die Mitteilungs-Identifizierung der empfangenen Mitteilung einer gespeicherten Identifizierung in der Liste entspricht; und
Zulassen des Aufrufens des Mitteilungshandhabungs-Service auf der Basis der gespeicherte Zuführweg-Information für diese Mitteilung.

5. Verfahren nach einem der Ansprüche 1 bis 4, bei dem die Identifizierung eine global einzigartige Identifizierung ist.

6. Verfahren nach einem der vorhergehenden Ansprüche, bei dem, falls ein Mitteilungshandhabungs-Service für die empfangene Mitteilung aufgerufen wird, das Verfahren ferner umfasst:
Aktualisieren der Zuführweg-Information, die der empfangenen Mitteilung zugeordnet ist.

7. Verfahren nach einem der Ansprüche 1 bis 6, bei dem, falls einer empfangenen Mitteilung nicht eine Zuführweg-Information zugeordnet ist, das Verfahren ferner umfasst:
Generieren von Zuführweg-Information und Zuordnen der generierten Zuführweg-Information zu der Mitteilung.

8. Verfahren zum Verarbeiten von SMS-Mitteilungen an einer Mitteilungs-Service-Einheit eines ersten Mobilfunkanbieternetzes, wobei das Netz mehrere Teilnehmer aufweist und das Netz Mitteilungshandhabungs-Services für mindestens einige der Teilnehmer stützt, die eine Mitteilung an einen anderen Teilnehmer ausgeben, wobei das Verfahren umfasst:
Empfangen einer Mitteilung (60);
Prüfen von Zuführweg-Information, die der empfangenen Mitteilung zugeordnet ist (60); und
Steuern des Aufrufs eines Mitteilungshandhabungs-Service für die empfangene Mitteilung auf der Basis der geprüften Zuführweg-Information (68);
wobei die Zuführweg-Information in einer der folgenden Formen in der Mitteilung mitgeführt wird:
als verborgener Text innerhalb der Mitteilung;
als Daten in dem UDH-Header der Mitteilung;
als Daten in einem Extension-Container einer MAP-Operation;
als Service-Center-Adresse, die angibt, dass die Meldung einem Mitteilungshandhabungs-Service unterzogen worden oder von ihm generiert worden ist; und
wobei der Schritt des Prüfens der Zuführweg-Information, die der empfangenen Mitteilung zugeordnet ist, das Prüfen der mit der Mitteilung mitgeführten Zuführweg-Information umfasst (60).

9. Verfahren nach Anspruch 8, bei dem, falls ein Mitteilungshandhabungs-Service für die empfangene Mitteilung aufgerufen wird, das Verfahren ferner umfasst:
Aktualisieren der Zuführweg-Information, die der empfangenen Mitteilung zugeordnet ist.

10. Verfahren nach Anspruch 8, bei dem, falls einer empfangenen Mitteilung nicht eine Zuführweg-Information zugeordnet ist, das Verfahren ferner umfasst:
Generieren von Zuführweg-Information und Zuordnen der generierten Zuführweg-Information zu der Mitteilung.

11. Verfahren nach einem der vorhergehenden Ansprüche, bei dem die Zuführweg-Information, die der empfangenen Mitteilung zugeordnet ist, eine oder mehrere der folgenden Informationen aufweist:
Information über die Services, die bereits an der Mitteilung durchgeführt worden sind;
eine Liste der Teilnehmer, zwischen denen die Mitteilung übermittelt worden ist;
einen Zählstand der Häufigkeit, mit der die Mitteilung aufgrund des Aufrufens von Mitteilungshandhabungs-Services übermittelt worden ist.

12. Verfahren nach Anspruch 11, ferner mit dem Vergleichen des Zählstandes in der Zuführweg-Information, die der empfangenen Meldung zugeordnet ist, mit einem Schwellenwert, und Verhindern des Aufrufens des Mitteilungshandhabungs-Service, falls der Zählstand gleich dem Schwellenwert ist oder diesen überschreitet.

13. Verfahren nach Anspruch 11, ferner mit dem Prüfen der Liste von Teilnehmern, zwischen denen die Mitteilung übermittelt worden ist, und dem Verhindern des Aufrufens eines Mitteilungshandhabungs-Service, falls dieser das Übermitteln der Mitteilung an einen User veranlassen würde, der in dieser Liste erscheint.

14. Computerprogrammprodukt mit Instruktionen zum Veranlassen eines Prozessors, das Verfahren nach einem der Ansprüche 1 bis 13 auszuführen.

15. SMS-Mitteilungs-Service-Netz-Einheit mit einem Prozessor, der zum Ausführen des Verfahrens nach einem der Ansprüche 1 bis 13 ausgebildet ist.

## Revendications

1. Un procédé de traitement de message SMS au niveau d'une entité de service de message d'un premier réseau d'opérateur mobile, le réseau comprenant une pluralité d'abonnés et le réseau supportant des services de traitement de message pour au moins certains des abonnés qui transfèrent un message à un autre abonné, le procédé comprenant :
la réception d'un message (70) ;
l'inspection d'information concernant le chemin de livraison associé au message reçu (71) ; et
la commande de l'invocation d'un service de traitement de message pour le message reçu sur la base de l'information du chemin de livraison (74) inspectée ;
dans lequel le réseau stocke de l'information de chemin de livraison pour des messages précédemment traités par l'entité de service de message, et l'étape consistant à inspecter l'information du chemin de livraison associée au message reçu comprend l'utilisation d'un identifiant dans le message reçu, ou obtenu à partir du message reçu, pour accéder à l'information de chemin de livraison stockée pour ce message (70).

2. Le procédé selon la revendication 1, comprenant en outre le calcul d'un identifiant pour le message reçu en utilisant une pluralité de champs du message reçu.

3. Le procédé selon la revendication 1, comprenant en outre :
la comparaison de l'identifiant de message dans le message reçu avec une liste d'identifiants de message stockés représentant les messages précédemment traités par l'entité de service de message ; et
l'autorisation de l'invocation du service de traitement de message dans le cas où l'identifiant de message du message reçu ne correspond pas à un identifiant stocké dans la liste.

4. Le procédé selon la revendication 1, comprenant en outre :
la comparaison de l'identifiant de message dans le message reçu avec une liste d'identifiants de message stockés représentant les messages traités précédemment par l'entité de service de message ;
l'accès à l'information de chemin de livraison stockée pour le message dans le cas où l'identifiant de message du message reçu correspond à un identifiant stocké dans la liste ; et
l'autorisation de l'invocation du service de traitement de message sur la base de l'information de chemin de livraison stockée pour ce message.

5. Le procédé selon l'une quelconque des revendications 1 à 4, dans lequel l'identifiant est un identifiant global unique.

6. Le procédé selon l'une quelconque des revendications précédentes dans lequel, dans le cas de l'invocation d'un service de traitement de message pour le message reçu, le procédé comprend en outre :
la mise à jour de l'information de chemin de livraison associée au message reçu.

7. Le procédé selon l'une quelconque des revendications 1 à 6 dans lequel, dans le cas où aucune information de chemin de livraison n'est associée à un message reçu, le procédé comprend en outre :
la génération d'information de chemin de livraison et l'association de l'information de chemin de livraison générée avec le message.

8. Un procédé de traitement de message SMS au niveau d'une entité de service de message d'un premier réseau d'opérateur mobile, le réseau comprenant une pluralité d'abonnés et le réseau supporte des services de traitement de message pour au moins certains des abonnés qui transfèrent un message à un autre abonné, le procédé comprenant :
la réception d'un message (60) ;
l'inspection d'information de chemin de livraison associée au message reçu (60) ; et
la commande de l'invocation d'un service de traitement de message pour le message reçu sur la base de l'information du chemin de livraison (68) inspectée ;
dans lequel l'information de chemin de livraison est transportée avec le message sous forme de l'un ou plusieurs des éléments suivants :
du texte caché au sein du message ;
des données dans l'en-tête UDH du message ;
des données dans un conteneur d'extension d'une opération MAP ;
une adresse de centre de service indiquant le fait que le message a été soumis à un service de traitement de message ou généré par celui-ci ; et
l'étape consistant à inspecter l'information de chemin de livraison associée au message reçu comprend l'inspection de l'information de chemin de livraison transportée avec le message (60).

9. Le procédé selon la revendication 8, dans lequel, dans le cas où un service de traitement de message est invoqué pour le message reçu, le procédé comprend en outre :
la mise à jour de l'information de chemin de livraison associée au message reçu.

10. Le procédé selon la revendication 8, dans lequel, dans le cas où aucune information de chemin de livraison n'est associée à un message reçu, le procédé comprend en outre :
la génération d'information de chemin de livraison et l'association de l'information de chemin de livraison générée avec le message.

11. Le procédé selon l'une quelconque des revendications précédentes, dans lequel l'information de chemin de livraison associée au message reçu comprend un ou plusieurs des éléments suivants:
de l'information concernant les services qui ont déjà été appliqués au message ;
une liste d'abonnés entre lesquels le message a été transféré ;
un décompte du nombre de fois que le message a été transféré suite à l'invocation de services de traitement de message.

12. Le procédé selon la revendication 11, comprenant en outre la comparaison du décompte de l'information de chemin de livraison associée au message reçu avec une valeur de seuil et l'empêchement de l'invocation du service de traitement de message dans le cas où le décompte est égal ou supérieur à la valeur de seuil.

13. Le procédé selon la revendication 11, comprenant en outre l'inspection de la liste d'abonnés entre lesquels le message a été transféré et l'empêchement de l'invocation d'un service de traitement de message si ceci aurait pour résultat l'expédition du message à un utilisateur figurant dans la liste.

14. Un produit sous forme d'un programme informatique comprenant des instructions permettant à un processeur de mettre en oeuvre le procédé selon l'une quelconque des revendications 1 à 13.

15. Une entité réseau de service de message SMS comprenant un processeur agencé pour mettre en oeuvre le procédé selon l'une quelconque des revendications 1 à 13.
